# EUROPEAN PATENT SPECIFICATION

(11) **EP 1 470 335 B1**
(45) Date of publication and mention of the grant of the patent: **09.11.2011**
(21) Application number: 02798634.8
(22) Date of filing: 31.12.2002
(51) Int. Cl.: F15B 1/00, F01L 23/00

(54) **RECIPROCATING FLUID ENGINE**
HUBKOLBEN-FLUIDMOTOR
MOTEUR HYDRAULIQUE A PISTON

(30) Priority: 03.01.2002 US 344050 P
(43) Date of publication of application: 27.10.2004
(73) Proprietor: Spin Master Ltd., Toronto, Ontario M5V 1B6 (CA)
(72) Inventor: BILYK, Derek, Mississauga, Ontario L2L 1C5 (CA); DE LAURIER, James, Concord, Ontario L4K 1M4 (CA); KOWNACKI, Charles, Erie, PA 16509 (US)
(74) Representative: Wilson Gunn
(86) International application number: PCT/US2002/041845
(87) International publication number: WO 2003/058072

(56) References cited:
- EP-A- 0 063 877
- EP-A- 1 253 288
- DE-A1- 2 823 667
- DE-A1- 3 701 151
- DE-B- 1 230 264
- DE-B- 1 263 402
- NL-C- 105 887
- US-A- 289 250
- US-A- 368 649
- US-A- 574 415
- US-A- 1 970 181
- US-A- 2 740 384
- US-A- 2 740 384
- US-A- 6 082 671
- US-B1- 6 530 541

## Description

### Field of the Invention

The present invention relates to a reciprocating fluid engine. More particularly, the present invention relates to a reciprocating fluid engine in which every stroke of the piston is a drive stroke. Still more particularly, the present invention relates to a toy ornithopter having a reciprocating fluid engine in which every stroke of the piston is a drive stroke.

### Background of the Invention

Existing toy vehicles have pneumatic engines in which one stroke of the piston is a drive stroke and in which the return stroke adds nothing to the performance of the engine. An engine operating in such a manner is inefficient. A need exists for an engine in which every stroke of the piston is a drive stroke.
German Patent Application No. DE19782823667 to Roser describes a compressed air motor having a cylinder with a piston slidable in the cylinder and connected to a compressed air inlet through a slide valve mechanism which alternately admits respective opposite sides of the cylinder with compressed air for driving the piston in the opposite direction and which alternately vents the side of the cylinder in which the piston is moving. German Patent Application No. 19591230264 to Zoller, geb. Kehl et al., describes the use of seals.

Existing omithopters have engines that require an excessive number of parts in order to operate. The large number of parts increases the weight of the ornithopter, as well as increasing the number of parts that must be manufactured to make the ornithopter. For example, U.S. Patent No. 6,082,671 to Michelson describes an entomopter which mimics the flight characteristics of an insect by flapping wings to generate lift. The wings are driven by a reciprocating chemical muscle. A need exists for an ornithopter having an engine with a reduced number of parts.

Thus, there is a continuing need for improved engines in which every stroke of the piston is a drive stroke.

### Summary of the Invention

Accordingly, it is a primary object of the present invention to provide an engine in which every stroke of the piston is a drive stroke.

Another object of the present invention is to provide a toy vehicle powered by an engine that has a reduced number of parts.

Another object of the present invention is to provide a toy ornithopter in which the piston provides a direct drive to the flapping wings, thereby eliminating the need for gear reduction from a rotary motor.

According to a first aspect of the present invention there is provided a toy ornithopter, comprising:
a container for storing fluid;
a first chamber connected to said container for receiving fluid from said container, said first chamber having an inner wall and first and second openings;
a second chamber for receiving fluid from said first chamber and connected to said first chamber by first and second passages;
a piston substantially disposed in said second chamber that is reciprocatingly moved by fluid entering said second chamber from said first chamber;
wherein,
first and second inner seals disposed in said inner wall of said first chamber to prevent fluid from passing through one or both of said first and second passages into said second chamber;
first and second outer seals disposed in said inner wall of said first chamber to prevent fluid from passing through one or both of said first and second openings in said first chamber;
a valve stem substantially disposed in said first chamber and movable through said first and second inner seals and said first and second outer seals; and
first and second wings attached to said piston that move in response to the reciprocating movement of said piston.

According to a second aspect of the present invention there is provided a method of operating toy ornithopter, comprising the steps of:
(a) supplying fluid to a first chamber;
(b) opening a first passage and blocking a second passage with respect to fluid in the first chamber with a valve stem in the first chamber to allow fluid to pass from the first chamber to a second chamber through the first passage;
(c) moving a piston in the second chamber in a first direction with fluid entering the second chamber through the first passage;
(d) moving the valve stem in the first direction with the piston to open the second passage and block the first passage with respect to fluid in the first chamber to allow fluid to pass from the first chamber to the second chamber through the second passage;
(e) moving the piston in a second direction with fluid entering the second chamber through the second passage;
(f) moving the valve stem in the second direction with the piston to open the first passage and block the second passage with respect to fluid in the first chamber to allow fluid to pass from the first chamber to the second chamber through the first passage; and
(g) repeating, steps (a) through (f) until the supply of fluid is exhausted,
wherein the first and second passages are blocked and opened with respect to fluid in the first chamber by first and second inner seals disposed in an inner wall of the first chamber;
wherein moving the piston in the first direction moves wings connected to the piston in a third direction; and
wherein moving the piston in the second direction moves the wings in a fourth direction; and
whereby moving the wings in the third and fourth direction provides a power stroke with each movement of the piston.

Other objects, advantages and salient features of the invention will become apparent from the following detailed description, which, taken in conjunction with the annexed drawings, discloses a preferred embodiment of the invention.

### Brief Description of the Drawing

Referring now to the drawings that form a part of the original disclosure:

FIG. 1 is a cross section of an engine according to the present invention in which the valve stem and piston are in a lowermost position;

FIG. 2 is a cross section of the engine according to the present invention in which the valve stem is in a lowermost position and the piston is moving upward;

FIG. 3 is a cross section of the engine according to the present invention in which the valve stem and piston are in an uppermost position;

FIG. 4 is a perspective view of the engine of FIG. 1;

FIG. 5 is a top view of the engine of FIG. 4;

FIG. 6 is an exploded perspective view of an ornithopter having the engine of FIG. 1;

FIG. 7 is an exploded perspective view of the ornithopter of FIG. 6 showing the engine fully assembled;

FIG. 8 is an elevational view of the ornithopter of FIG. 7 fully assembled;

FIG. 9 is a top plan view of the ornithopter of FIG. 8 having main and rear wings; and

FIG. 10 is a perspective view of the ornithopter of FIG. 9.

### Detailed Description of the Invention

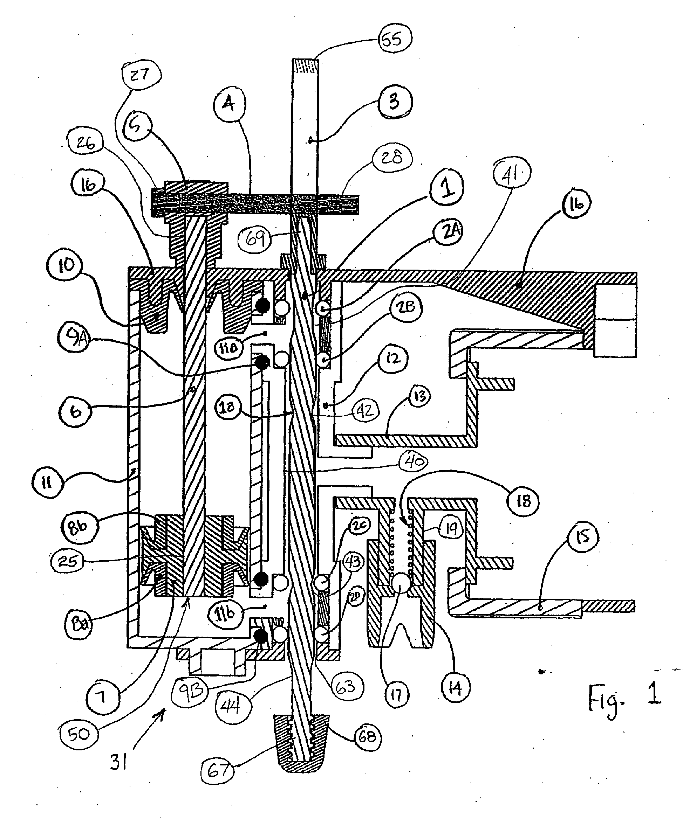

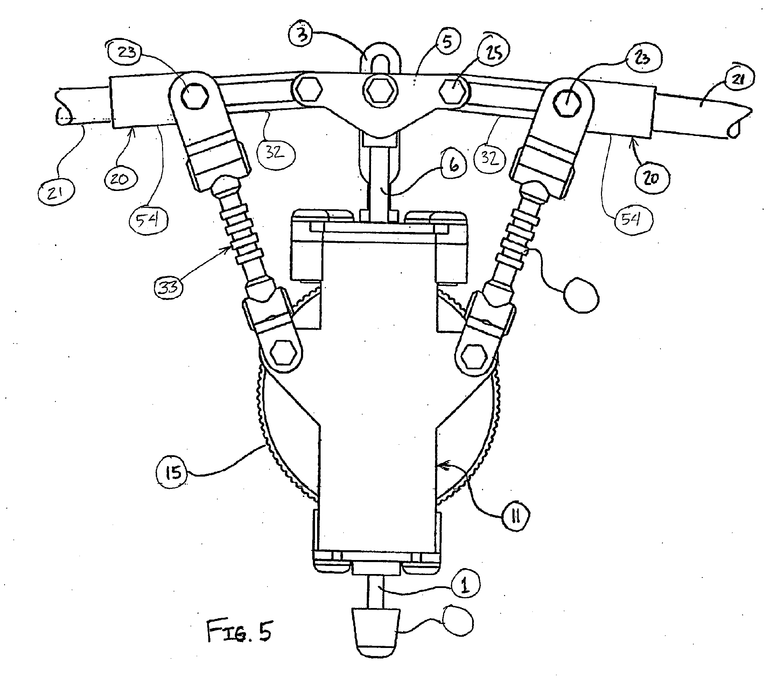

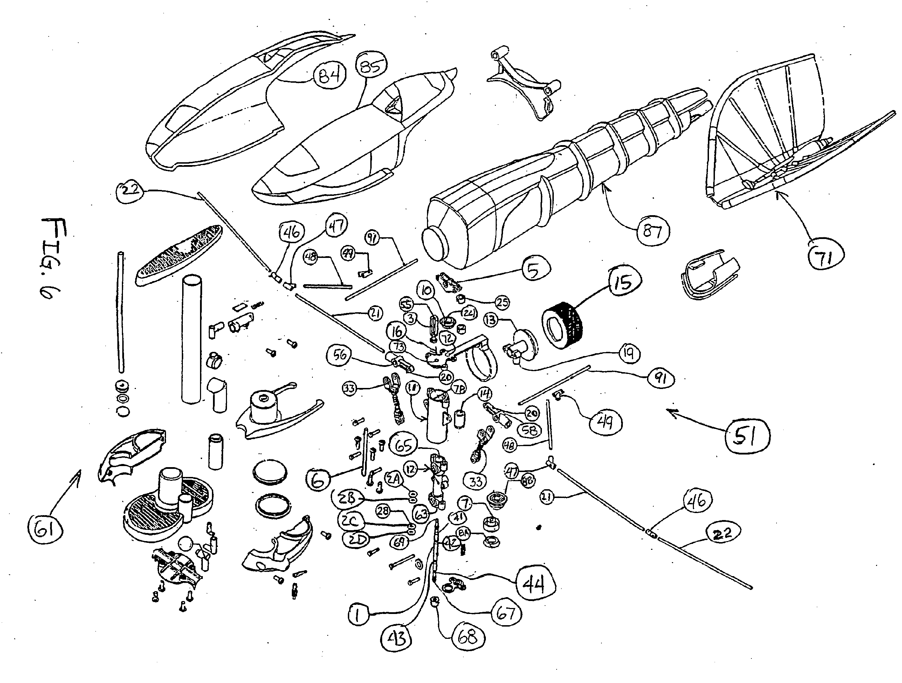

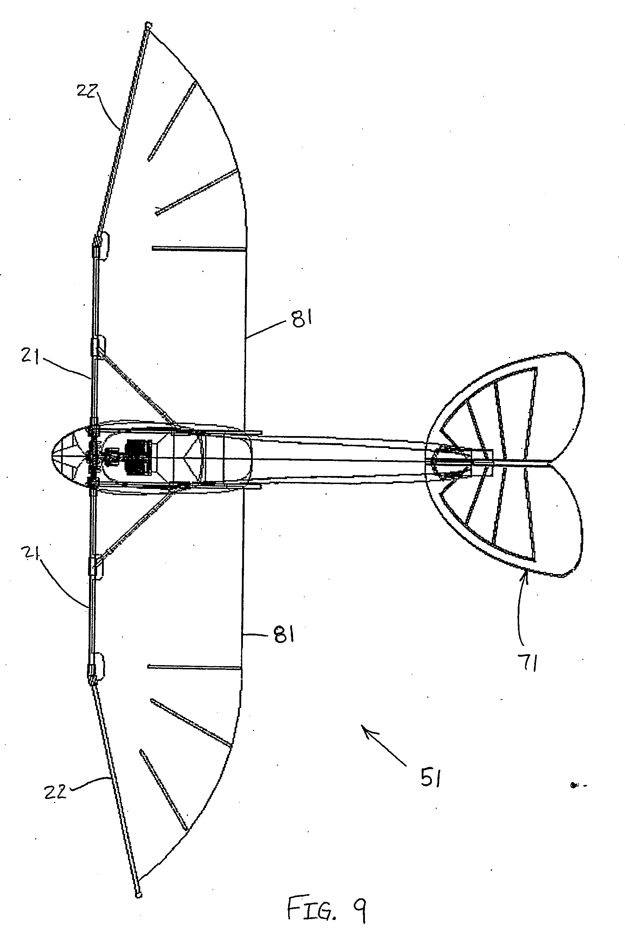

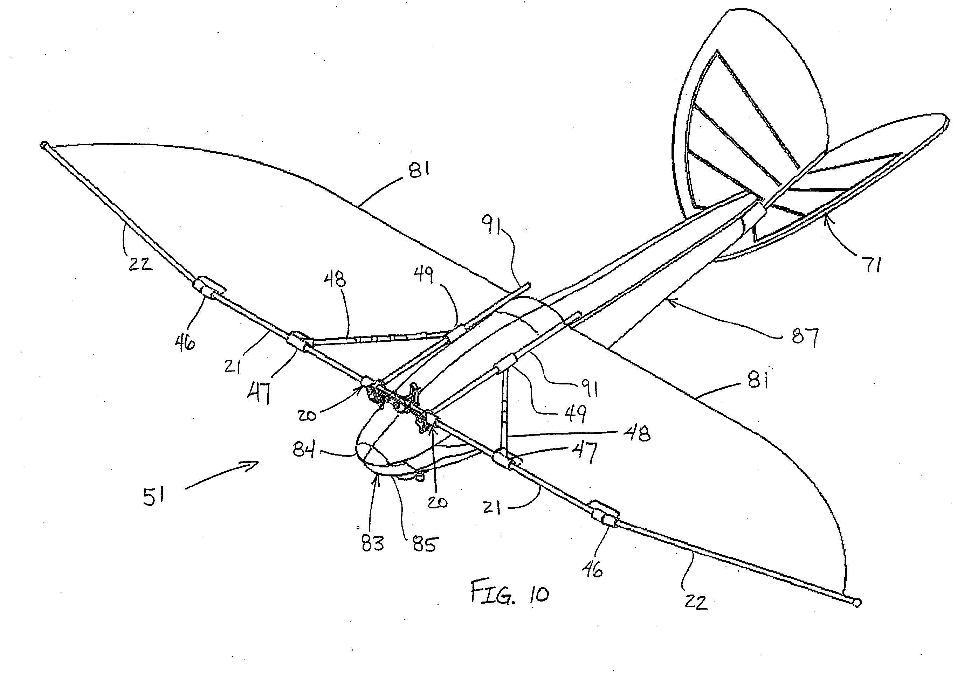

A reciprocating fluid engine 31 according to the present invention is shown in FIGS. 1 - 6. The reciprocating fluid engine 31 produces a high frequency and a high stroke force. Preferably, the frequency is approximately twenty (20) hertz. The reciprocating fluid engine 31 may be used to power a vehicle, such as a toy ornithopter 51, as shown in FIGS. 6 - 10. The reciprocating fluid engine 31 drives a piston assembly 50 in which every stroke of the piston assembly is a drive stroke, such that each stroke of the piston assembly powers the vehicle in some manner. When used to power the toy ornithopter 51, each stroke of the piston assembly 50 moves the wings 81 of the ornithopter either up or down, thereby causing the wings to flap with every stroke of the piston assembly. The following description relates to the reciprocating fluid engine 31 of the present invention being used to power a toy ornithopter 51, although the use of the reciprocating fluid engine is not limited to powering toy ornithopters.

Fluid is pumped into a high pressure, lightweight container or storage vessel 15 using a standard piston fluid pump 61, as shown in FIGS. 1 - 6. Preferably, the fluid is high pressure air. The high pressure storage vessel 15 is mechanically attached to the reciprocating fluid engine 31 through an intake manifold 13. Preferably, storage vessel 15 is threadably connected to intake manifold 13. Fluid pump 61 connects to the intake manifold 13 through an adapter 14. The intake manifold 13 has a fluid input receptacle 19 with a one way check valve 17 and spring 18. Fluid entering receptacle 19 forces the check valve 17 to compress spring 18, thereby allowing the fluid to enter the manifold 13. When no fluid is entering receptacle 19, the spring 18 maintains the check valve in a seated position with the adapter 14, thereby preventing fluid from escaping from the manifold 13 through the receptacle and adapter. The fluid is also retained within the vessel 15 and a first chamber 12 of the engine 31 by the timing valve stem 1 and by first and second inner seals 2C and 2B, respectively.

A valve stem 1 is substantially disposed in the first chamber or valve stem cylinder 12, which is preferably cylindrical. The first chamber 12 has a first opening 63 and a second opening 65 at opposing ends of the chamber. The valve stem 1 has a first end 67 and a second end 69. The first end 67 of the valve stem 1 extends through a first opening 63 in the first chamber 12. The second end 69 of the valve stem 1 extends through a second opening 65 of the first chamber 12 and through a first opening 72 in housing bracket 16. The first end 67 of the valve stem is connected to a stem stop 68. The second end 69 of the valve stem 1 is received by the valve timing member 55.

Valve stem 1 has four undercuts or grooves 41, 42, 43 and 44. Four seals 2A, 2B, 2C and 2D are mounted on an inner wall 40 of the valve stem cylinder 12. Preferably, the seals are O-rings or cup seals. The valve stem 1 moves reciprocatingly within the valve stem cylinder 12 and through an opening in each of the seals 2A, 2B, 2C and 2D, as shown in FIGS. 1 - 3. Each undercut 41, 42, 43 and 44 in the valve stem 1 is adapted to receive one of the seals 2A, 2B, 2C and 2D. First undercut 44 receives first outer seal 2D. Second undercut 43 receives first inner seal 2C. Third undercut 42 receives second inner seal 2B. Fourth undercut 41 receives second outer seal 2A. When a seal is aligned with its corresponding undercut, fluid is allowed to pass between that seal and the valve stem. When a seal is not aligned with its corresponding undercut, a tight seal is formed within the valve stem cylinder 12 by that seal, the inner valve stem cylinder wall 40 and valve stem 1, thereby preventing fluid from passing. This seal prevents passage of fluid from the vessel 15 either to a second chamber or piston cylinder 11 or to vent to the atmosphere through first and second openings 63 and 65 in the valve stem cylinder 12.

The second chamber or piston cylinder 11 is fluidly connected to the first chamber (valve stem cylinder 12) by first and second passages 11B and 11A, respectively. The piston assembly 50 is substantially disposed within the second chamber 11. The piston assembly 50 includes a connecting rod 6, a piston 7 connected to a first end 25 of the connecting rod, upper and lower piston seals 8A and 8B attached to upper and lower surfaces of the piston, and a bracket 5 connected to a second end 26 of the rod. Preferably, the second chamber 11 has an open end 78, as shown in FIG. 6. The open end 78 of the second chamber 11 is sealed with a connecting rod seal 10 thåt is secured to the second chamber by a second chamber portion 77 of housing bracket 16, as shown in FIGS. 1 - 3. An opening 24 in the connecting rod seal 10 and an opening 73 in the housing bracket 16 allow for reciprocal movement therethrough of the connecting rod 6.

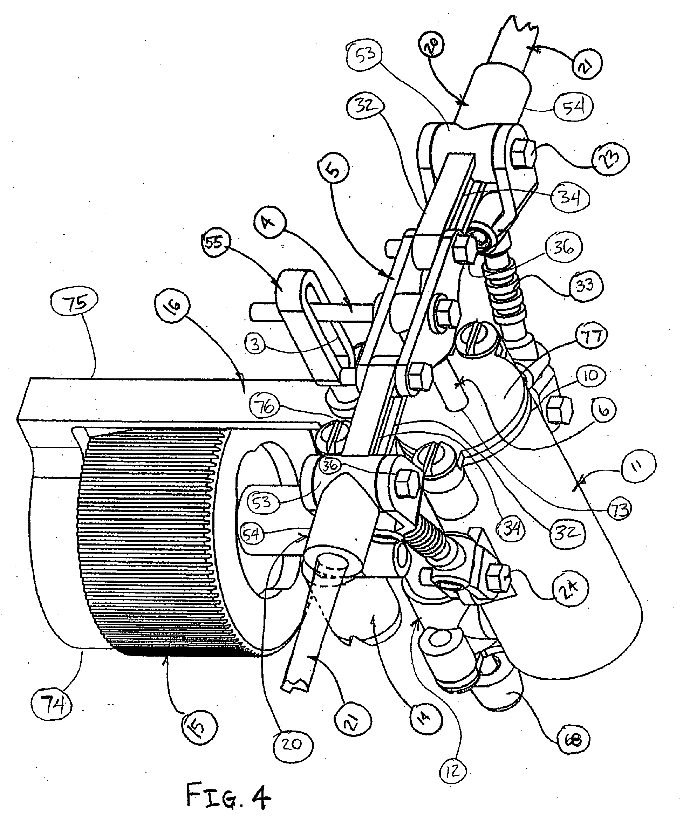

Housing bracket 16, as shown in FIGS. 4 and 6, secures the vessel 15, first chamber 12 and second chamber 11 together. The housing bracket 16 has a cylindrical portion 74 for receiving the vessel 15. A bracket arm 75 extends perpendicularly from the cylindrical portion 74 of the housing bracket 16. The bracket arm 75 has a first chamber portion 76 for capping the second opening 65 of the first chamber 12. A first opening 72 in the first chamber portion 76 of the bracket arm 75 receives second end 69 of the valve stem 1. The bracket arm 75 has a second chamber portion 77 for receiving connecting rod seal 10, thereby sealing opening 78 in second chamber 11. The second chamber portion 77 of the bracket arm 75 has a second opening 73 for receiving connecting rod 6. Seal 9A positioned between first and second chambers 12 and 11 proximal second passage 11A prevents fluid leakage between the chambers. Seal 9B positioned between first and second chambers 12 and 11 proximal first passage 11B prevents fluid leakage between first and second chambers.

Bracket 5 is attached to a second end 26 of the connecting rod 6. A first end 27 of horizontal guide rod 4 is secured to bracket 5. A second end 28 of the horizontal guide rod 4 passes through an opening 3 (stem timing slot) in a stem timing member 55. The stem timing member 55 is connected to the second end 69 of the valve stem 1.

Leading edge adapters 20 are connected to opposite ends of the bracket 5, as shown in FIGS. 4 - 6 and 9 - 10. The leading edge adapters 20 have a central portion 53, a linking arm 32 extending from the central portion and an outer strut receiver 54 extending from the central portion. Preferably, the central portion 53 is substantially cylindrical with first and second openings 56 and 58. The first opening 56 receives a pin 23 to pivotally connect the leading edge adapter 20 to a strut support 33. A second opening 58 receives a rearwardly extending strut 91. A leading edge inner strut 21 extends outwardly from each of the outer strut receivers of the leading edge adapters 20. Leading edge adapters 20 pivot about pins 23, which secure the adapters to the strut connectors 33. The strut connectors 33 are pinned to the leading edge adapters 20 at a first end, and the second end of the strut connectors is secured to the piston cylinder 11. Linking arms 32 on the leading edge adapters 20 connect the leading edge adapters to the bracket 5. Preferably, slots 34 in the leading edge adapters 20 receive pins 36 of bracket 5, to allow movement of the adapter with respect to the bracket, thereby providing a degree of flexibility to the wings 81.

Wings 81 are supported by a plurality of strut members. Preferably, outer struts 22 extend from the leading edge inner struts 21. Straight connecting members 46 are used to connect the inner and outer struts 21 and 22. "Y" connecting members 47 and 49 positioned on the inner and rear struts 21 and 91, respectively, are used to connect cross-support struts 48. Wings 81 are attached to the inner, outer, rear and cross-support struts 21, 22, 91 and 48 in any suitable manner.

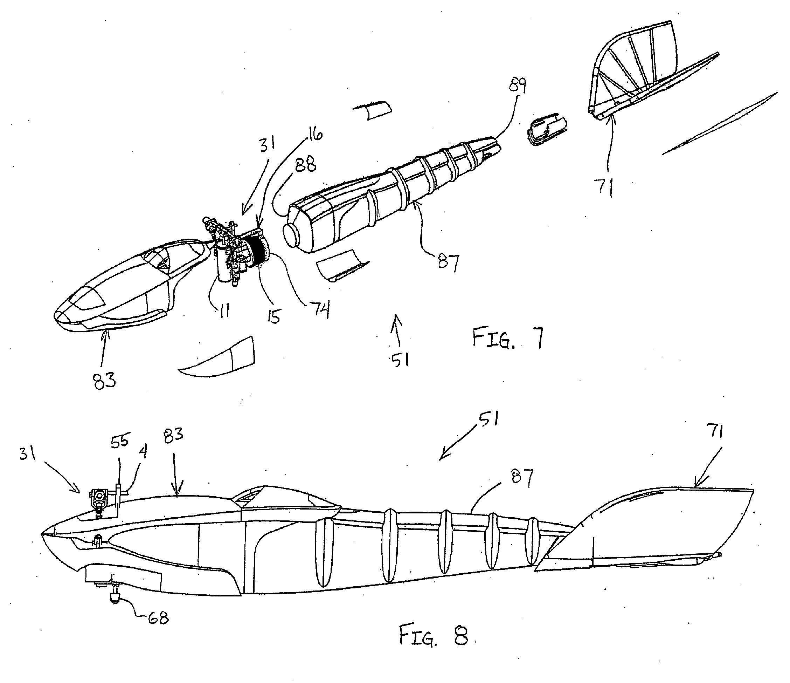

Engine 31 is substantially disposed in engine housing 83, as shown in FIGS. 7 and 8. Preferably, the engine housing 83 includes first and second engine housing portions 84 and 85 for substantially enclosing the engine 31 within the engine housing 83. The cylindrical portion 74 of the bracket housing 16 is secured to a front end 88 of the body housing 87. Rear wing 71 is connected to a rear end 89 of the body housing 87.

### Operation

The vessel 15 is initially pressurized by connecting fluid pump 61 to adapter 14 and pressurizing the vessel as desired. Once the vessel 15 is pressurized, the ornithopter 51 is in operational condition. When the toy ornithopter 51 is launched, i.e., thrown into the air, air pressure forces the wings 81 upward, thereby also moving the inner and outer struts 21 and 22 upward since they are connected to the wings. Upward movement of the inner and outer struts 21 and 22 causes upward movement of the outer strut receivers 54 of the leading edge adapters. As the outer strut receivers move upward, the leading edge adapters 20 rotate about pins 23, thereby causing the linking arms 32 to move downward. Downward movement of the linking arms 32 forces bracket 5 and attached horizontal guide rod 4 to move downward. When horizontal guide rod 4 reaches the bottom of stem timing slot 3, the stem timing member 55 and valve timing stem 1 are moved downward so that seal 2C is aligned with undercut 43, thereby allowing fluid to pass by seal 2C, through first passage 11 B and into first chamber 11. This starts the firing sequence.

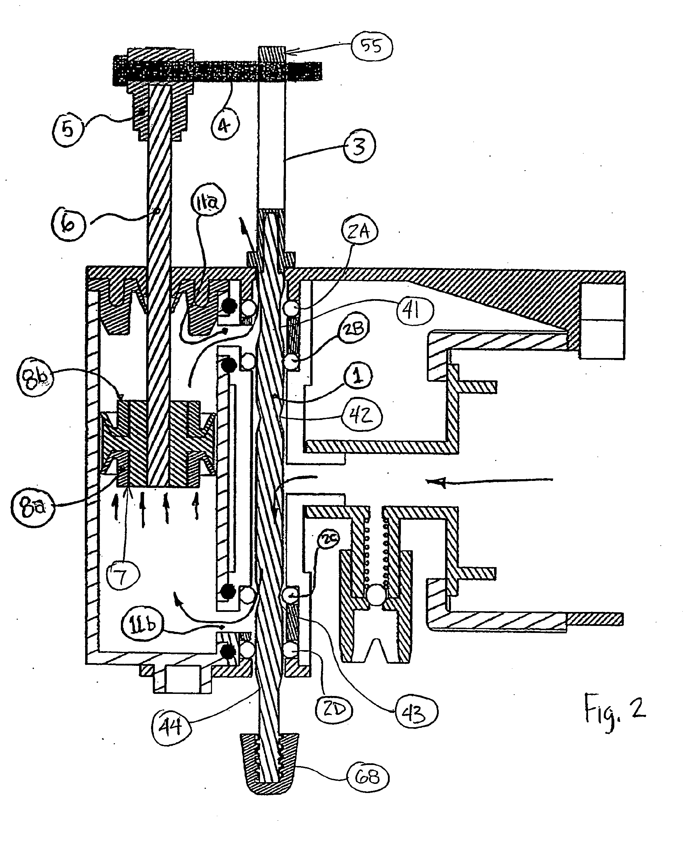

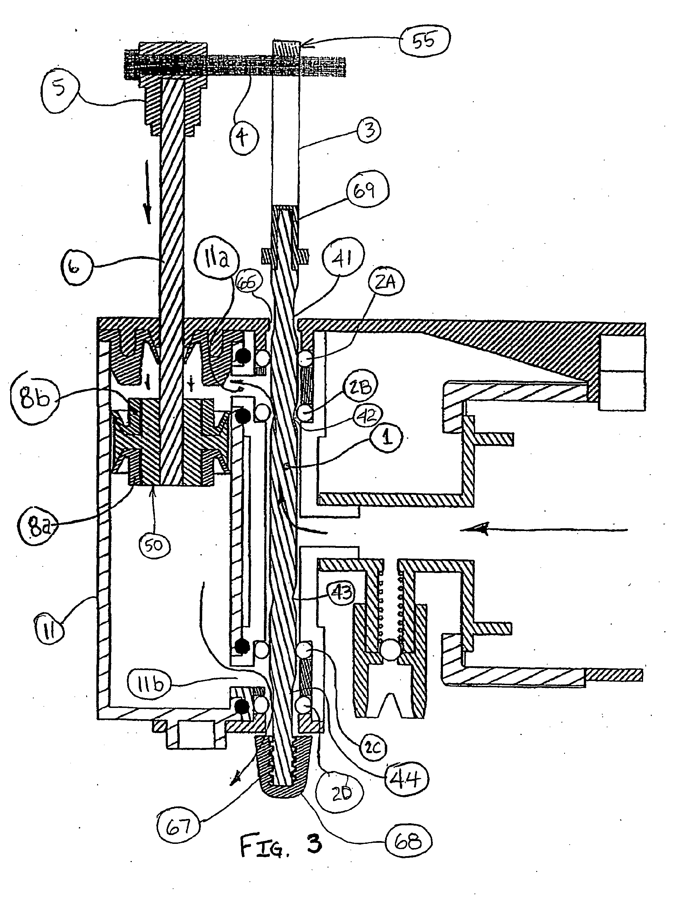

Valve stem 1 has three basic positions during a normal cycle of the engine: a center position, a lowermost position (FIGS. 1 and 2), and an uppermost position (FIG. 3). The center position corresponds to the position of the valve stem 1 prior to launching the ornithopter 51, such that the fluid is stored in the vessel 15 and the first chamber 12 between the first and second inner seals 2C and 2B. The lowermost position of the valve stem shown in FIG. 1 corresponds to the position of the valve stem described in the paragraph above just after launching the ornithopter, i.e., when the bracket 5 and valve stem 1 are in their lowermost positions proximal the housing bracket 16.

The first position of the valve stem 1 is the center or middle position. In the center position, the fluid held in the pressure vessel is shut off between the valve stem 1 and first and second inner seals 2C and 2B, thereby preventing fluid from passing from the first chamber to the second chamber. This prevents the engine 31 from running.

When the valve stem 1 is in the lowermost position, as shown in FIGS. 1 and 2, the fluid is stopped between the valve stem 1 and second inner seal 2B. The fluid passes by valve stem 1 and first inner seal 2C since the first inner seal is seated in undercut 43. The fluid then passes through a first passage or orifice 11B and into the second chamber or piston cylinder 11. The fluid is prevented from escaping to the atmosphere through first opening 63 in the first chamber 12 by the tight seal formed between first outer seal 2D, inner surface 40 of the first chamber and valve stem 1 since seal 2D is not seated in corresponding undercut 44. Fluid pressure is then exerted on lower piston seal 8A, forcing piston 7 and connecting rod 6, bracket 5 and horizontal guide rod 4 in an upward movement. As bracket 5 moves upward, linking arms 32 pivot upward, thereby pivoting outer strut receivers 54 downward. The downward movement of the outer strut receivers 54 causes the inner and outer struts 21 and 22 to move downward. Wings 81 attached to the inner and outer struts 21 and 22 are forced downward by the downward movement of the struts. Any increased fluid pressure created on the upper piston seal 8B is vented out second passage or orifice 11A and then between the stem and second outer seal 2A and out the second opening 65 in the valve stem cylinder 12 to the atmosphere, since second outer seal 2A is seated in corresponding undercut 41. Since the valve stem 1 is attached to the stem timing member 55 that encases the horizontal guide rod 4, the upward moving piston assembly 50 forces the valve stem to rise at the last moment to its uppermost position, as shown in FIGS. 2 and 3, thereby starting the next sequence. As the connecting rod 6 and bracket 5 near the end of their upward movement, horizontal guide rod 4 reaches the upper end of timing slot 3 in the valve timing member 55. Further upward movement of the horizontal guide rod 4 results in upward movement of the valve timing member 55, thereby causing upward movement of valve stem 1. Upward movement of the valve stem 1 is stopped when the valve stem stop 68 contacts the first chamber 12. Upper movement of the valve stem 1 also results in first inner seal 2C no longer being aligned with undercut 43, thereby stopping fluid from flowing through first passage 11B and into second chamber 12.

When the valve stem 1 is in its uppermost position, as shown in FIG. 3, the fluid is stopped between the valve stem 1 and first inner seal 2C since seal 2C is not seated in corresponding undercut 43. The fluid passes by the valve stem 1 and second inner seal 2B since seal 2B is seated in corresponding undercut 42. The fluid then passes through second orifice 11A and into the piston cylinder 11. Fluid pressure is then exerted on upper piston seal 8B, thereby forcing the piston and connecting rod 6, adapter 5 and horizontal guide rod 4 in a downward movement, which, as previously described, forces the wings up. Any increased air pressure created on the lower piston seal 8A is then vented out first orifice 11B, and then between the valve stem 1 and second outer seal 2D, and out the first opening 63 in the valve stem cylinder 12 to the atmosphere. Since the valve stem 1 is attached to the valve stem timing slot member 55 that encases the horizontal guide rod 4, the downward moving piston assembly 50 forces the valve stem 1 to drop at the last moment to its lowermost position, returning the valve stem 1 and piston assembly 50 to the position shown in FIG. 1 and starting the previous sequence. Downward movement of the piston assembly 50 and the valve stem 1 is stopped when the bracket 5 contacts the second chamber 11 and the timing member 55 contacts the first chamber 11, respectively. Downward movement of the valve stem 1 results in second inner seal 2B no longer being aligned with undercut 42, thereby stopping fluid from flowing through second passage 11A and into second chamber 12.

Therefore, as described in the preceding paragraphs, each upward and downward stroke of the piston assembly 50 results in either an upward or downward movement of the wings 81, thereby resulting in an efficient and powerful engine. This sequence automatically repeats, thereby stroking the wings at a high frequency and high power cycle causing the device to fly until the fluid pressure decreases, which stops the cycle.

While advantageous embodiments have been chosen to illustrate the invention, it will be understood by those skilled in the art that various changes and modifications may be made therein without departing from the scope of the invention as defined in the appended claims.

## Claims

1. A toy ornithopter (51), comprising:
a container (15) for storing fluid;
a first chamber (12) connected to said container for receiving fluid from said container, said first chamber having an inner wall (40) and first (63) and second (65) openings;
a second chamber (11) for receiving fluid from said first chamber (12) and connected to said first chamber by first (11b) and second (11a) passages;
a piston (50) substantially disposed in said second chamber (11) that is reciprocatingly moved by fluid entering said second chamber (11) from said first chamber (12),
wherein,
first (2c) and second (2b) inner seals disposed in said inner wall of said first chamber (12) to prevent fluid from passing through one or both of said first and second passages (11a,11b) into said second chamber (11)
first (2d) and second (2a) outer seals disposed in said inner wall of said first chamber (12) to prevent fluid from passing through one or both of said first and second openings (63,65) in said first chamber (12),
a valve stem (1) substantially disposed in said first chamber (12) and movable through said first and second inner seals (2c,2b) and said first and second outer seals (2d,2a), and
first and second wings (81) attached to said piston that move in response to the reciprocating movement of said piston (50).

2. A toy ornithopter according to claim 1, wherein
said fluid is high pressure gas.

3. A toy ornithopter according to claim 1 or 2, wherein
said container is removably connected to said first chamber.

4. A toy ornithopter according to any one of claims 1, 2 or 3, wherein
said first and second inner seals and said first and second outer seals are o-rings.

5. A toy ornithopter according to any one of claims 1, 2, 3, or 4, wherein
said first and second inner seals and said first and second outer seals are cup seals.

6. A toy ornithopter according to any one of claims 1, 2, 3, 4, or 5, wherein
said valve stem being movable between first and second positions by said piston.

7. A toy ornithopter according to any one of claims 1,2, 3, 4, 5, or 6, wherein
said piston is moved in a first direction by fluid entering said second chamber through said first passage; and
said piston is moved in a second direction by fluid entering said second chamber through said second passage.

8. A toy ornithopter according to any one of claims 1, 2, 3, 4, 5, 6, or 7, wherein
said second chamber (11) has a first end and a second end, said first passage (11b) being proximal said first end and said second passage (11a) being proximal said second end.

9. A toy ornithopter according to any one of claims 1, 2, 3, 4, 5, 6, 7 or 8, wherein
said valve stem (1) has first, second, third and fourth undercuts (44, 43, 42, 41) for receiving said first outer seal (2d), said first inner seal (2c), said second inner seal (2b), and said second outer seal (2a), respectively, to allow fluid to pass when one of said seals is seated in one of said undercuts.

10. A toy ornithopter according to any one of claims 1, 2, 3, 4, 5, 6, 7, 8 or 9, wherein
a pump is removably connected to said container for filling said container with fluid.

11. A toy ornithopter according to any one of claims 1, 2, 3, 4, 5, 6, 7, 8 9 or 10, wherein
said valve stem is connected to said piston to move said valve with said piston.

12. A toy ornithopter according to claim 6, wherein
said first valve stem position has said first inner seal (2c) received by a second undercut (43) in said valve stem (1) to allow fluid to flow through said first passage (11b) to said second chamber (11);
said first outer seal (2d) is not received by a first undercut (44) in said valve stem to prevent fluid from flowing through said first opening (63) in said first chamber (12);
said second inner seal (2b) is not received by a third undercut (42) in said valve stem to prevent fluid from flowing through said second passage (11a) to said second chamber (11); and
said second outer seal (2a) is received by a fourth undercut (41) in said valve stem to allow fluid to flow from said second chamber (11) through said second passage (11a) into said first chamber (12) and out said second opening (65).

13. A toy ornithopter according to claim 12, wherein
said second valve stem position has said second inner seal (2b) received by said third undercut (42) in said valve stem (1) to allow fluid to flow through said second passage (11a) to said second chamber (11);
said second outer seal (2a) is not received by said fourth undercut (41) in said valve stem (1) to prevent fluid from flowing through said second opening (65) in said first chamber (12);
said first inner seal (2c) is not received by said second undercut (43) in said valve stem (1) to prevent fluid from flowing through said first passage (11b) to said second chamber (11); and
said first outer seal (2d) is received by said first undercut (44) in said valve stem (1) to allow fluid to flow from said second chamber (11) through said first passage (11b) into said first chamber (12) and out said first opening (63).

14. A method of operating toy ornithopter (51), comprising the steps of:
(a) supplying fluid to a first chamber (12);
(b) opening a first passage (11b) and blocking a second passage (11a) with respect to fluid in the first chamber (12) with a valve stem (1) in the first chamber (12) to allow fluid to pass from the first chamber (12) to a second chamber (11) through the first passage (11b);
(c) moving a piston (50) in the second chamber (11) in a first direction with fluid entering the second chamber (12) through the first passage (11b),
(d) moving the valve stem (11) in the first direction with the piston (50) to open the second passage (11a) and block the first passage (11b) with respect to fluid in the first chamber (12) to allow fluid to pass from the first chamber (12) to the second chamber (11) through the second passage, (11a),
(e) moving the piston (50) in a second direction with fluid entering the second chamber (11) through the second passage (11a),
(f) moving the valve stem (1) in the second direction with the piston (50) to open the first passage (11b) and block the second passage (11a) with respect to fluid in the first chamber (12) to allow fluid to pass from the first chamber (12) to the second chamber (11) through the first passage (11b) ; and
(g) repeating ,steps (a) through (f) until the supply of fluid is exhausted, wherein the first and second passages (11b,11a) are blocked and opened with respect to fluid in the first chamber (12) by first and second inner seals (2c, 2d) disposed in an inner wall (40) of the first chamber (12),
wherein moving the piston (50) in the first direction moves wings (81) connected to the piston (50) in a third direction; and
wherein moving the piston (50) in the second direction moves the wings (81) in a fourth direction; and
whereby moving the wings (81) in the third and fourth direction provides a power stroke with each movement of the piston (50),

15. A method of operating a toy ornithopter according to claim 14, wherein
moving the valve stem in the first direction opens the first passage with respect to fluid in the second chamber for venting fluid from the second chamber through the first passage.

16. A method of operating a toy ornithopter according to claim 14 or 15, wherein
moving the valve stem in the second direction opens the second passage with respect to fluid in the second chamber for venting fluid from the second chamber through the second passage.

## Patentansprüche

1. Spielzeug-Ornithopter (51), umfassend:
einen Behälter (15) zum Speichern eines Fluids;
eine erste Kammer (12), die mit dem Behälter verbunden ist, um Fluid aus dem Behälter aufzunehmen, wobei die erste Kammer eine Innenwand (40) und eine erste (63) und zweite (65) Öffnung aufweist;
eine zweite Kammer (11), um Fluid aus der ersten Kammer (12) aufzunehmen und die über einen ersten (11b) und zweiten (11a) Kanal mit der ersten Kammer verbunden ist;
einen Kolben (50), der im Wesentlichen in der zweiten Kammer (11) angeordnet ist und von Fluid, das aus der ersten Kammer (12) in die zweite Kammer (11) gelangt, hin und her bewegt wird,
wobei
eine erste (2c) und zweite (2b) innere Dichtung, die in der Innenwand der ersten Kammer (12) angeordnet sind, um zu verhindern, dass das Fluid durch den ersten und/oder zweiten Kanal (11a, 11b) in die zweite Kammer (11) strömt;
eine erste (2d) und zweite (2a) äußere Dichtung, die in der Innenwand der ersten Kammer (12) angeordnet sind, um zu verhindern, dass das Fluid durch die erste und/oder zweite Öffnung (63, 65) in der ersten Kammer (12) strömt;
eine Ventilspindel (1), die im Wesentlichen in der ersten Kammer (12) angeordnet ist und sich durch die erste und zweite innere Dichtung (2c, 2b) und die erste und zweite äußere Dichtung (2d, 2a) bewegen kann; und
einen ersten und zweiten Flügel (81), die an dem Kolben befestigt sind und sich als Reaktion auf die Hln- und Herbewegung des Kolbens (50) bewegen.

2. Spielzeug-Ornithopter nach Anspruch 1, wobei
das Fluid ein Hochdruckgas ist.

3. Spielzeug-Ornithopter nach Anspruch 1 oder 2, wobei
der Behälter abnehmbar mit der ersten Kammer verbunden ist.

4. Spielzeug-Ornithopter nach einem der Ansprüche 1, 2 oder 3, wobei
die erste und zweite innere Dichtung und die erste und zweite äußere Dichtung O-Ringe sind.

5. Spielzeug-Ornithopter nach einem der Ansprüche 1, 2, 3 oder 4, wobei
die erste und zweite innere Dichtung und die erste und zweite äußere Dichtung Topfmanschetten sind.

6. Spielzeug-Ornithopter nach einem der Ansprüche 1, 2, 3, 4 oder 5, wobei
die Ventilspindel von dem Kolben zwischen einer ersten und zweiten Position bewegt werden kann.

7. Spielzeug-Ornithopter nach einem der Ansprüche 1, 2, 3, 4, 5 oder 6, wobei
der Kolben von dem Fluid, das durch den ersten Kanal in die zweite Kammer gelangt, in eine erste Richtung bewegt wird; und
der Kolben von dem Fluid, das durch den zweiten Kanal in die zweite Kammer gelangt, in eine zweite Richtung bewegt wird.

8. Spielzeug-Ornithopter nach einem der Ansprüche 1, 2, 3, 4, 5, 6 oder 7, wobei
die zweite Kammer (11) ein erstes Ende und ein zweites Ende aufweist, wobei sich der erste Kanal (11b) nahe dem ersten Ende befindet und sich der zweite Kanal (11a) nahe dem zweiten Ende befindet.

9. Spielzeug-Ornithopter nach einem der Ansprüche 1, 2, 3, 4, 5, 6, 7 oder 8, wobei
die Ventilspindel (1) eine erste, zweite, dritte und vierte Kerbe (44, 43, 42, 41) zum Aufnehmen der ersten äußeren Dichtung (2d), der ersten inneren Dichtung (2c), der zweiten inneren Dichtung (2b) beziehungsweise der zweiten äußeren Dichtung (2a) aufweist, sodass das Fluid vorbeiströmen kann, wenn eine der Dichtungen in einer der Kerben sitzt.

10. Spielzeug-Ornithopter nach einem der Ansprüche 1, 2, 3, 4, 5, 6, 7, 8 oder 9, wobei
eine Pumpe abnehmbar mit dem Behälter verbunden ist, um den Behälter mit Fluid zu befüllen.

11. Spielzeug-Ornithopter nach einem der Ansprüche 1, 2, 3, 4, 5, 6, 7, 8, 9 oder 10, wobei
die Ventilspindel mit dem Kolben verbunden ist, um das Ventil mit dem Kolben zu bewegen.

12. Spielzeug-Ornithopter nach Anspruch 6, wobei
in der ersten Ventilspindelposition die erste innere Dichtung (2c) von einer zweiten Kerbe (43) in der Ventilspindel (1) aufgenommen ist, sodass das Fluid durch den ersten Kanal (11b) zur zweiten Kammer (11) strömen kann;
die erste äußere Dichtung (2d) nicht von einer ersten Kerbe (44) in der Ventilspindel aufgenommen ist, um zu verhindern, dass das Fluid durch die erste Öffnung (63) in der ersten Kammer (12) strömt;
die zweite innere Dichtung (2b) nicht von einer dritten Kerbe (42) in der Ventilspindel aufgenommen ist, um zu verhindern, dass das Fluid durch den zweiten Kanal (11a) in die zweite Kammer (11) strömt; und
die zweite äußere Dichtung (2a) von einer vierten Kerbe (41) in der Ventilspindel aufgenommen ist, sodass das Fluid von der zweiten Kammer (11) durch den zweiten Kanal (11a) in die erste Kammer (12) und aus der zweiten Öffnung (65) strömen kann.

13. Spielzeug-Ornithopter nach Anspruch 12, wobei
in der zweiten Ventilspindelposition die zweite innere Dichtung (2b) von der dritten Kerbe (42) in der Ventilspindel (1) aufgenommen ist, sodass das Fluid durch den zweiten Kanal (11a) zur zweiten Kammer (11) strömen kann;
die zweite äußere Dichtung (2a) nicht von der vierten Kerbe (41) in der Ventilspindel (1) aufgenommen ist, um zu verhindern, dass das Fluid durch die zweite Öffnung (65) in der ersten Kammer (12) strömt;
die erste innere Dichtung (2c) nicht von der zweiten Kerbe (43) in der Ventilspindel (1) aufgenommen ist, um zu verhindern, dass das Fluid durch den ersten Kanal (11b) in die zweite Kammer (11) strömt; und
die erste äußere Dichtung (2d) von der ersten Kerbe (44) in der Ventilspindel (1) aufgenommen ist, sodass das Fluid von der zweiten Kammer (11) durch den ersten Kanal (11b) in die erste Kammer (12) und aus der ersten Öffnung (63) strömen kann.

14. Verfahren zum Bedienen des Spielzeug-Ornithopters (51), das folgende Schritte umfasst:
(a) Leiten von Fluid in eine erste Kammer (12);
(b) Öffnen eines ersten Kanals (11b) und Versperren eines zweiten Kanals (11a) gegenüber dem Fluid in der ersten Kammer (12) mit einer Ventilspindel (1) in der ersten Kammer (12), sodass das Fluid von der ersten Kammer (12) durch den ersten Kanal (11b) zu einer zweiten Kammer (11) gelangen kann;
(c) Bewegen eines Kolbens (50) in der zweiten Kammer (11) in eine erste Richtung, wobei das Fluid durch den ersten Kanal (11b) in die zweite Kammer (11) gelangt,
(d) Bewegen der Ventilspindel (1) mit dem Kolben (50) in die erste Richtung, um den zweiten Kanal (11a) zu öffnen und den ersten Kanal (11b) gegenüber dem Fluid in der ersten Kammer (12) zu versperren, sodass das Fluid von der ersten Kammer (12) durch den zweiten Kanal (11a) zur zweiten Kammer (11) gelangen kann;
(e) Bewegen des Kolbens (50) in eine zweite Richtung, wobei das Fluid durch den zweiten Kanal (11a) in die zweite Kammer (11) gelangt,
(f) Bewegen der Ventilspindel (1) mit dem Kolben (50) in die zweite Richtung, um den ersten Kanal (11b) zu öffnen und den zweiten Kanal (11a) gegenüber dem Fluid in der ersten Kammer (12) zu versperren, sodass das Fluid von der ersten Kammer (12) durch den ersten Kanal (11b) zur zweiten Kammer (11) gelangen kann; und
(g) Wiederholen der Schritte (a) bis (f), bis das zugeführte Fluid verbraucht ist,
wobei der erste und zweite Kanal (11a, 11b) gegenüber dem Fluid in der ersten Kammer (12) mit der ersten und zweiten inneren Dichtung (2c, 2d), die in einer Innenwand (40) der ersten Kammer (12) angeordnet sind, versperrt und geöffnet werden;
wobei durch die Bewegung des Kolbens (50) in die erste Richtung die Flügel (81), die mit dem Kolben (50) verbunden sind, in eine dritte Richtung bewegt werden, und
wobei durch die Bewegung des Kolbens (50) in die zweite Richtung die Flügel (81) in eine vierte Richtung bewegt werden, und
wobei die Bewegung der Flügel (81) in die dritte und vierte Richtung mit jeder Bewegung des Kolbens (50) für einen Arbeitshub sorgt.

15. Verfahren zum Bedienen eines Spielzeug-Ornithopters nach Anspruch 14, wobei
die Bewegung der Ventilspindel in die erste Richtung den ersten Kanal gegenüber dem Fluid in der zweiten Kammer öffnet, um Fluid aus der zweiten Kammer durch den ersten Kanal abzulassen.

16. Verfahren zum Bedienen eines Spielzeug-Ornithopters nach Anspruch 14 oder 15, wobei
die Bewegung der Ventilspindel in die zweite Richtung den zweiten Kanal gegenüber dem Fluid in der zweiten Kammer öffnet, um Fluid aus der zweiten Kammer durch den zweiten Kanal abzulassen.

## Revendications

1. Ornithoptère jouet (51), comprenant :
un récipient (15) pour stocker du fluide ;
une première chambre (12) raccordée audit récipient pour recevoir du fluide dudit récipient, ladite première chambre ayant une paroi interne (40) et des première (63) et deuxième (65) ouvertures ;
une deuxième chambre (11) pour recevoir du fluide de ladite première chambre (12) et raccordée à ladite première chambre par des premier (11b) et deuxième (11a) passages ;
un piston (50) sensiblement disposé dans ladite deuxième chambre (11), qui est déplacé selon un mouvement de va-et-vient par le fluide qui entre dans ladite deuxième chambre (11) à partir de ladite première chambre (12),
dans lequel :
des premier (2c) et deuxième (2b) joints d'étanchéité internes disposés dans ladite paroi interne de ladite première chambre (12) pour empêcher le fluide de passer par l'un ou les deux parmi lesdits premier et deuxième passages (11a, 11b) dans ladite deuxième chambre (11),
des premier (2d) et deuxième (2a) joints d'étanchéité externes disposés dans ladite paroi interne de ladite première chambre (12) pour empêcher le fluide de passer par une ou les deux parmi lesdites première et deuxième ouvertures (83, 65) dans ladite première chambre (12),
une tige de soupape (1) sensiblement disposée dans ladite première chambre (12) et mobile à travers lesdits premier et deuxième joints d'étanchéité internes (2c, 2b) et lesdits premier et deuxième joints d'étanchéité externes (2d, 2a); et
des première et deuxième ailes (81) fixées audit piston qui se déplacent en réponse au mouvement de va-et-vient dudit piston (50).

2. Ornithoptère jouet selon la revendication 1, dans lequel ledit fluide est du gaz à haute pression.

3. Ornithoptère jouet selon la revendication 1 ou 2, dans lequel ledit récipient est raccordé de manière amovible à ladite première chambre.

4. Ornithoptère jouet selon l'une quelconque des revendications 1, 2 ou 3, dans lequel lesdits premier et deuxième joints d'étanchéité internes et lesdits premier et deuxième joints d'étanchéité externes sont des joints toriques.

5. Ornithoptère jouet selon l'une quelconque des revendications 1, 2, 3 ou 4, dans lequel lesdits premier et deuxième joints d'étanchéité internes et lesdits premier et deuxième joints d'étanchéité externes sont des joints calottes.

6. Ornithoptère jouet selon l'une quelconque des revendications 1, 2, 3, 4 ou 5, dans lequel ladite tige de soupape est mobile entre lesdites première et deuxième positions grâce audit piston.

7. Ornithoptère jouet selon l'une quelconque des revendications 1, 2, 3, 4, 5 ou 6, dans lequel :
ledit piston est déplacé dans une première direction par le fluide qui entre dans ladite deuxième chambre par ledit premier passage ; et
ledit piston est déplacé dans une deuxième direction par le fluide qui entre dans ladite deuxième chambre par ledit deuxième passage.

8. Ornithoptère jouet selon l'une quelconque des revendications 1, 2, 3, 4, 5, 6 ou 7, dans lequel ladite deuxième chambre (11) a une première extrémité et une deuxième extrémité, ledit premier passage (11b) étant à proximité de ladite première extrémité et ledit deuxième passage (11a) étant à proximité de ladite deuxième extrémité.

9. Ornithoptère jouet selon l'une quelconque des revendications 1, 2, 3, 4, 5, 6, 7 ou 8, dans lequel ladite tige de soupape (1) a des première, deuxième, troisième et quatrième dégagements (44, 43, 42, 41) pour recevoir ledit premier joint d'étanchéité externe (2d), ledit premier joint d'étanchéité interne (2c), ledit deuxième joint d'étanchéité interne (2b) et ledit deuxième joint d'étanchéité externe (2a) respectivement, pour permettre au fluide de passer lorsque l'un desdits joints d'étanchéité est installé dans l'un desdits dégagements.

10. Ornithoptère jouet selon l'une quelconque des revendications 1, 2, 3, 4, 5, 6, 7, 8 ou 9, dans lequel une pompe est raccordée de manière amovible audit récipient pour remplir ledit récipient avec du fluide.

11. Ornithoptère jouet selon l'une quelconque des revendications 1, 2, 3, 4, 5, 6, 7, 8, 9 ou 10, dans lequel ladite tige de soupape est raccordée audit piston pour déplacer ladite soupape avec ledit piston.

12. Ornithoptère jouet selon la revendication 6, dans lequel :
ladite première position de tige de soupape a un premier joint d'étanchéité interne (2c) reçu par un deuxième dégagement (43) dans ladite tige de soupape (1) pour permettre au fluide de s'écouler à travers ledit premier passage (11b) jusqu'à ladite deuxième chambre (11) ;
ledit premier joint d'étanchéité externe (2d) n'est pas reçu par un premier dégagement (44) dans ladite tige de soupape pour empêcher le fluide de s'écouler par ladite première ouverture (63) dans ladite première chambre (12) ;
ledit deuxième joint d'étanchéité interne (2b) n'est pas reçu par un troisième dégagement (42) dans ladite tige de soupape pour empêcher le fluide de s'écouler par ledit deuxième passage (11a) dans ladite deuxième chambre (11) ; et
ledit deuxième joint d'étanchéité externe (2a) est reçu par un quatrième dégagement (41) dans ladite tige de soupape pour permettre au fluide de s'écouler à partir de ladite deuxième chambre (11) en passant par ledit deuxième passage (11a) dans ladite première chambre (12) et de sortir par ladite deuxième ouverture (65).

13. Ornithoptère jouet selon la revendication 12, dans lequel :
ladite deuxième position de tige de soupape a ledit deuxième joint d'étanchéité interne (2b) reçu par ledit troisième dégagement (42) dans ladite tige de soupape (1) pour permettre au fluide de s'écouler par ledit deuxième passage (11a) dans ladite deuxième chambre (11) ;
ledit deuxième joint d'étanchéité externe (2a) n'est pas reçu par ledit quatrième dégagement (41) dans ladite tige de soupape (1) pour empêcher le fluide de s'écouler par ladite deuxième ouverture (65) dans ladite première chambre (12) ;
ledit premier joint d'étanchéité interne (2c) n'est pas reçu par ledit deuxième dégagement (43) dans ladite tige de soupape (1) pour empêcher le fluide de s'écouler par ledit premier passage (11b) dans ladite deuxième chambre (11) ; et
ledit premier joint d'étanchéité externe (2d) est reçu par ledit premier dégagement (44) dans ladite tige de soupape (1) pour permettre au fluide de s'écouler à partir de ladite deuxième chambre (11) en passant par ledit premier passage (11b) dans ladite première chambre (12) et de sortir par ladite première ouverture (63).

14. Procédé pour actionner un ornithoptère jouet (51), comprenant les étapes consistant à :
(a) alimenter une première chambre (12) en fluide ;
(b) ouvrir un premier passage (11b) et bloquer un deuxième passage (11a) par rapport au fluide dans la première chambre (12) avec une tige de soupape (1) dans la première chambre (12) pour permettre au fluide de passer de la première chambre (12) à la deuxième chambre (11) par le premier passage (11b) ;
(c) déplacer un piston (50) dans la deuxième chambre (11) dans une première direction avec le fluide qui pénètre dans la deuxième chambre (12) par le premier passage (11b) ;
(d) déplacer la tige de soupape (1) dans la première direction avec le piston (50) pour ouvrir le deuxième passage (11a) et bloquer le premier passage (11b) par rapport au fluide dans la première chambre (12) pour permettre au fluide de passer de la première chambre (12) à la deuxième chambre (11) par le deuxième passage (11a) ;
(e) déplacer le piston (50) dans une deuxième direction avec le fluide qui pénètre dans la deuxième chambre (11) en passant par le deuxième passage (11a) ;
(f) déplacer la tige de soupape (1) dans la deuxième direction avec le piston (50) pour ouvrir le premier passage (11b) et bloquer le deuxième passage (11a) par rapport au fluide dans la première chambre (12) pour permettre au fluide de passer de la première chambre (12) à la deuxième chambre (11) par le premier passage (11b) ; et
(g) répéter les étapes (a) à (f) jusqu'à ce que l'alimentation de fluide soit épuisée,
dans lequel les premier et deuxième passages (11b, 11a) sont bloqués et ouverts par rapport au fluide dans la première chambre (12) par les premier et deuxième joints d'étanchéité internes (2c, 2d) disposés dans une paroi interne (40) de la première chambre (12),
dans lequel l'étape consistant à déplacer le piston (50) dans la première direction déplace les ailes (81) raccordées au piston (50) dans une troisième direction ; et
dans lequel l'étape consistant à déplacer le piston (50) dans la deuxième direction déplace les ailes (81) dans une quatrième direction ; et
moyennant quoi l'étape consistant à déplacer les ailes (81) dans la troisième et la quatrième direction fournit une course de combustion avec chaque mouvement du piston (50).

15. Procédé pour actionner un ornithoptère jouet selon la revendication 14, dans lequel :
l'étape consistant à déplacer la tige de soupape dans la première direction ouvre le premier passage par rapport au fluide dans la deuxième chambre pour évacuer le fluide de la deuxième chambre par le premier passage.

16. Procédé pour actionner un ornithoptère jouet selon la revendication 14 ou 15, dans lequel :
l'étape consistant à déplacer la tige de soupape dans la deuxième direction ouvre le deuxième passage par rapport au fluide dans la deuxième chambre pour évacuer le fluide de la deuxième chambre par le deuxième passage.
